# EUROPEAN PATENT APPLICATION

(11) **EP 3 106 256 A1**
(43) Date of publication of application: **21.12.2016**
(21) Application number: 15001822.4
(22) Date of filing: 19.06.2015
(51) Int. Cl.: B23D 57/00, B28D 5/04, B23D 63/00

(54) **METHOD FOR CUTTING A WORKPIECE**

(71) Applicant: Meyer Burger AG, 3645 GWATT (Thun) (CH)
(72) Inventor: Boyon, Fernando, 3600 Thun (CH); Aeschbacher, Roger, 3664 Burgistein (CH); Frech, Gregor, 3012 Bern (CH)
(74) Representative: Laminger, Norbert

(57) **Abstract**

The invention relates to a method for cutting a workpiece (30) on a wire saw (1) comprising a cutting wire (3) that runs in multiple loops around at least two wire guide rollers (14) thereby forming a wire web for cutting the workpiece (30).

## Description

The invention relates to a method for cutting a workpiece on a wire saw comprising a cutting wire that runs, preferably in multiple loops, around at least two wire guide rollers thereby forming a wire web for cutting the workpiece.

Workpieces may be formed from hard and/or brittle materials such as silicon (bricks), sapphire, quartz (cores), etc..

JP H1128654 A discloses a dressing method and device of fixed abrasive grain wire saw. It is known that wires with fixed abrasive grains are dressed by cutting dressing stones. Even though the wire is treated here in the wire saw, it cannot alter the physical properties of the wire as desired to obtain the desired cutting performance.

JP 2011079073 A discloses a manufacturing method of fixed abrasive grain type saw wire. A manufacturing method of a fixed abrasive grain type cutting wire is known which can remove a plating film of the abrasive grain on an outer peripheral. After covering the surface of a wire core material with a binding material thus fixing the abrasive grains, a second step is conducted of winding a wire on which the abrasive grains are fixed on an outer periphery of one roller having a running groove and winding twice or more the wire on the same running groove of the roller to run the roller. This method is suited for dressing the wire during manufacturing. Since this method is carried out during manufacturing of the wire, it cannot be used to clean the wire during cutting.

From WO2010006148A2 a wire slicing system is known. The wear of the cutting wire - due to its contact with the workpiece, but also due to contacts with windings of other cutting wire portions (e.g. on a spool outside the wire web) - is high and there is the need for increasing the lifetime of the cutting wire.

From WO 2014/087340 A2 "Wire management system" systems are known that are especially suited for carrying out the inventive method and are hereby incorporated by reference. Here, portions of the cutting wire are wound on a (intermediate) storage spool during cutting, wherein the windings on the storage spool do not overlap and/or have a lower density than the windings of a cutting wire on a reservoir spool. Wear of the cutting wire may be reduced in this way.

In prior art there exists the problem that the sharpness of the cutting wire decreases with time leading to a decreased cutting performance. As a result the cutting wire has to be exchanged often. The sharpness may be impaired by wearing off of the diamonds or abrasive particles by cluttering of the spaces between these particles.

The object of the invention is to overcome these problems and to provide a method for cutting a workpiece, wherein the cutting performance of the cutting wire is prolonged with respect to prior art. Wear of the cutting wire should be kept low. At the same time the sharpness of the cutting wire should be kept at an acceptable level. The lifetime of a cutting wire should be increased.

The object is achieved by a method for cutting a workpiece on a wire saw comprising a cutting wire that runs, preferably in multiple loops, around at least two wire guide rollers thereby forming a wire web for cutting the workpiece, the method comprising the steps of:
(a) moving the cutting wire forming the wire web in a number of cycles back and forth by alternately rotating the wire guide rollers in opposite directions;
(b) transferring, after step (a), a portion of the cutting wire from the wire guide rollers to a spool, by rotating the wire guide rollers and the spool;
(c) transferring, after step (b), a portion of the cutting wire from the spool to the wire guide rollers, by rotating the wire guide rollers and the spool (2, 8);
(d) moving, after step (c), the cutting wire forming the wire web in a number of cycles back and forth by alternately rotating the wire guide rollers in opposite directions,
   wherein there is a first cutting wire portion of the cutting wire that meets the following criteria:
   (I) during step (a) and during step (d) the first cutting wire portion forms at least temporarily a wire web portion that comes into contact with the workpiece,
   (II) during step (a) and during step (d) windings formed from the cutting wire along the length of the first cutting wire portion do not exceed a first winding thickness along the entire length of the first cutting wire portion,
   (III) during step (b) the first cutting wire portion is completely wound onto the spool, wherein windings formed from the cutting wire along the length of the first cutting wire portion on the spool result in a (second) winding thickness that is higher than the first winding thickness, preferably along the entire length of the first cutting wire portion.
   (IV) during step (c) the first cutting wire portion is completely unwound from the spool.

Winding thickness is the distance between the wire receiving surface of the spool or a wire guide roller and the surface of the uppermost winding layer on that spool or wire guide roller. The wire receiving surface is the mantle surface of the spool or wire guide roller. In the case of only one winding layer (windings do not overlap) the winding thickness corresponds to the diameter of the cutting wire. On a wire guide roller supporting the wire web there is only one winding layer, i.e. the winding thickness corresponds to the cutting wire diameter.

In step (b) it would be possible that the first cutting wire portion is spooled onto other cutting wire portions already present on that spool. Even in that case, the winding thickness is measured from the wire receiving surface of the spool.

With increasing number of overlapping winding layers also the winding thickness increases. A winding thickness greater than d (wherein d is the diameter of the cutting wire) results in overlapping windings that touch each other. Instead of - or additionally to - the term "(first) winding thickness" the term "(first) number of winding layers" or "(first) number of winding overlaps" may be used.

Preferably, the first winding thickness is smaller than 5d, preferably smaller than 3d, wherein d is the diameter of the cutting wire.

Preferably, the (second) winding thickness of said windings on said spool according to criterion (III) is at least twice as large than the first winding thickness.

Preferably, the difference between the first winding thickness and the second winding thickness is smaller than 5d, preferably smaller than 3d even more preferably 1d, wherein d is the diameter of the cutting wire. If the first wire portion is spooled directly onto the wire receiving surface of the spool, the second winding thickness is preferably at least 2d, such as 3d.

Criterion (I) describes that the first cutting wire portion contributes to the cutting process - i.e. cuts the workpiece during step (a). The wear of the cutting wire is kept low, since windings formed from the cutting wire along the length of the first cutting wire portion do not exceed a first winding thickness according to criterion (II).

According to the invention the first cutting wire portion is sharpened by the fact that it meets criterion (III), i.e. step (b) becomes a sharpening and/or cleaning step. Touching windings and a higher winding thickness result in a sharpening of the abrasive particles and/or cleaning spaces between the abrasive particles.

When cycling the cutting wire back and forth, the wire is alternatingly moved it a first axial direction of the wire and a second, opposite axial direction of the wire.

Criterion (IV) in connection with step (c) guarantees that the first cutting wire portion again, i.e. after sharpening, contributes to the cutting process - i.e. cuts the workpiece during step (d). It is preferred that during step (c) the first cutting wire portion (coming from the spool) is completely wound to the wire guide rollers.

"Windings formed from the cutting wire along the length of the first cutting wire portion" comprises windings formed form the first cutting wire portion but may also comprise windings of other wire portions. For the sharpening effect it is important that the windings of the first cutting wire portion overlap with other windings. However, it is not necessary that these other windings are also formed by the first cutting wire portion.

The main advantage of the invention consists in the fact that the wear of the cutting wire is kept low due to the criterion (II). Step (b) is then used for sharpening the first cutting wire portion. The inventive method, including the sharpening step - step (b) with the criterion (III) - may be also carried out during the cutting process, i.e. during the workpiece is cut by the wire web. During the inventive method the workpiece may remain in the wire saw. Multiple workpieces may be cut simultaneously, forming a load of the wire saw.

An aspect of the invention consists in sharpening the cutting wire, while it is mounted (running) within the wire saw. A preferred aspect consists in sharpening the cutting wire during a cutting process or at least while the wire is mounted on the wire saw.

It is not mandatory, that the steps (a) to (d) are carried out directly after one another. Intermediate steps may be provided. A step may be repeated numerous times before continuing with another step.

"Wire guide rollers" may be any means for guiding the cutting wire in order to form at least one cutting wire section that defines a cutting area. Wire guide rollers maybe e.g. in the form of rolls (e.g. with rills for guiding the wire), pulleys, wheels, etc..

A "wire web" may be formed by multiple wire sections that run essentially parallel to each other. It is, however, understood that also a single wire section may form a wire web.

The spool is not directly involved in forming the wire web: The spool is arranged outside the wire guide rollers, preferably outside the cutting area.

With increasing winding thickness also the winding density is increased. "Winding density" means the number of windings per unit length in a direction extending parallel to the axis of the respective wire guide roller or spool. In an alternative way criterion (II) may state that windings formed from the cutting wire along the length of the first cutting wire portion do not exceed a first winding density along the entire length of the first cutting wire portion. The first winding density may be defined such, that the windings do not touch each other, i.e. there is a distance between neighboring windings. In that case the winding density would be smaller than 1/d, wherein d is the diameter of the cutting wire. Diameter d may be defined as the diameter of a circle enclosing the complete wire cross section including the abrasive particles on it. In the case windings overlap with each other the winding density is greater than 1/d.

Preferably, the first winding density is smaller than 5/d, preferably smaller than 2/d.

Criterion (III) may be defined alternatively in that windings formed from the cutting wire along the length of the first cutting wire portion on the spool touch each other and/or touch windings of other cutting wire portions on said spool, wherein the winding density of said windings on said spool (second winding density) result in a winding density that is higher than the first winding density, preferably along the entire length of the first cutting wire portion

Preferably, the (second) winding density of said windings on said spool according to criterion (III) is greater than 5/d, preferably greater than 10/d, more preferably greater than 20/d.

Preferably, the (second) winding density of said windings on said spool according to criterion (III) is at least twice as large than the first winding density. The wire densities are not constant as windings are spooled on top of each other. As used here wire density always is the largest wire density achieved.

Winding thicknesses and densities do not have to be kept constant during the cutting process. Moreover, winding thicknesses and densities may vary during the cutting process and e.g. be constant on the at least one spool at a given time. They may however also vary over the at least one spool.

In a preferred embodiment at least one of the steps (a) to (d) is repeated at least 2 times, preferably at least 5 times, more preferably at least 10 times, before carrying out the next step. It is preferred that the cutting procedure using the first cutting wire portion is a continuous process. Also the sharpening step (step (b)) may be repeated before the first cutting wire portion is again used for cutting.

In a preferred embodiment after step (d) the steps (b) to (d) are repeated, preferably at least once, preferably at least 2 times, more preferably at least 4 times.

In a preferred embodiment during step (a) the first cutting wire portion at least partially, preferably with its entire length, remains on the wire guide rollers. The winding thickness on the wire guide rollers corresponds to the diameter of the cutting wire. Neighboring windings do not touch each other. The wire may be guided by grooves on the wire guide rollers.

In a preferred embodiment during step (a) the first cutting wire portion is temporarily (and at least partially) wound on a spool outside the wire guide rollers, wherein windings formed from the cutting wire along the length of the first cutting wire portion on the spool do not exceed the first winding thickness. Although the first cutting wire portion (at least partially) leaves the wire.guide rollers it is guaranteed that the first winding thickness is not exceeded thereby minimizing wear of the wire. The spool onto which the first cutting wire portion is wound (in this embodiment) during step (a) can be the same spool as mentioned in step (b) and step (c) or may be a different spool.

Preferably, the spool may not be the spool used for supplying new wire to the wire saw (supplier spool). Preferably, the spool may not be used for disposing used-up wire.

In a preferred embodiment the first winding thickness is such, that the windings of the first cutting wire portion do not overlap with each other and windings of other wire portions, preferably do not touch each other or windings of other wire portions. Here, the winding density is ≤ 1/d, preferably < 1/d, where d is the diameter of the cutting wire. The lifetime of the wire may prolonged very effectively, since there is no wear caused by wire touching/friction.

Preferably, the number of overlapping layers formed from windings of the first cutting wire portion (alone) during step (a) and/or during step (d) is smaller than the number of overlapping layers formed from windings of the first cutting wire portion (alone) during step (b). Here, the sharpening effect is mainly achieved by the fact that windings of the first cutting wire portion touch each other. The first cutting wire portion then sharpens itself.

Preferably the number of overlapping layers formed from windings of the first cutting wire portion (alone) during step (b) is at least 2 (all layers being counted, also the top layer), even more preferably at least 3.

In a preferred embodiment the first cutting wire portion has a length corresponding to at least 10, preferably at least 50, more preferably at least 100, loops of cutting wire around the at least two wire guide rollers. Here, a large portion of cutting wire may be sharpened at once.

Preferably, the first cutting wire portion has a length of at least 100 meters (preferably between 200m and 400m), more preferred of at least 500 meters, (preferably between 600m and 800m).

Preferably, the first cutting wire portion stays completely on the wire guide rollers during step (a), step (d) or both. In that way that part of the wire always used for cutting the workpiece.

In a preferred embodiment at least during step (b) and/or during step (c) a workpiece is cut with the wire web of the wire saw (1), wherein preferably the workpiece is cut in all steps (a) to (d). The advantage of the invention is, that it is not necessary to interrupt the cutting process yielding high quality cuts, while re-sharpening the cutting wire in step (b).

In another variant at least during step (a) and/or during step (d) a workpiece is cut with the wire web of the wire saw, wherein preferably the workpiece is cut in all steps (a) to (d).

In a preferred embodiment the number of cycles in step (a) amounts to at least 10, preferably to at least 20, more preferably to at least 50, and/or wherein the number of cycles in step (d) amounts to at least 2, preferably to at least 10, more preferably to at least 20.

In a preferred embodiment step (b) followed by step (c) are carried out at least 2 times, preferably at least 4 times, more preferably at least 8 times, before carrying out step (d). In such a way the results of sharpening becomes more effective.

Preferably step (b) followed by step (c) are carried out at least once, preferably at least 2 times, more preferably at least 4 times for one workpiece.

In a preferred embodiment step (a) and/or step (d) is/are carried out at least 10 times, preferably at least 50 times, preferably at least 200 times, more often than step (b) followed by step (c). Such an embodiment becomes possible, since the wear is already reduced in keeping the winding density below the first winding density.

In a preferred embodiment the spool the first cutting wire portion is spooled onto in step (b) is located on the used wire side of the wire guide rollers. This allows to store the worn cutting wire portion after multiple steps (a) to (d).

In a preferred embodiment the spool is a storage spool for holding cutting wire in non-overlapping, preferably non-touching windings or a reservoir spool for holding unused or used-up wire or any combination thereof. Non-overlapping and non-touching windings have the advantage of less wear.

In a preferred embodiment the cutting wire is a fixed abrasive wire, preferably a diamond wire or a nano tube wire, e.g. metallic-bonded or resin-bonded. The abrasives may be bonded by means of glue or resin or by a metallic interconnection. During the sharpening step with a higher winding density the abrasive particles sharp each other.

The object is also achieved with a wire saw comprising at least two wire guide rollers, a cutting wire that runs in multiple loops around at least two wire guide rollers thereby forming a wire web for cutting a workpiece, at least one spool outside the wire guide rollers and a controller for controlling the cutting procedure, wherein the wire saw is adapted for carrying out a method according to one of the preceding claims.

In the following further aspects and variants will be described:

The portion of a cutting wire coiling around the wire guide rollers is all wire on the surface of a wire guide roller or extending between wire guide rollers. It is also called cutting wire on or held by the wire guide rollers. This wire forms or is the cutting area. Note that normally only one wire web of the cutting area is used for cutting. If wire is no longer held by the wire guide rollers it has left the cutting area (is outside of the cutting area) or put differently is outside the wire guide rollers.

The goal of the invention is to selectively spool the first cutting wire portion in touching, preferably overlapping, windings so that the desired wire treatment (sharpening and/or cleaning) is achieved. The workpiece is cut by bringing it in contact with the cutting wire in the cutting area. The wire saw may have in its cutting area only one single cutting wire that cuts the workpiece. Alternatively, the wire saw may have multiple wire sections. Such wire saws often being called a multi-wire saw. All types of wire saw can be used according to the current invention. Prior to carrying out the inventive method, the cutting area is provided with cutting wire, preferably by spooling a wire portion into the cutting area.

Preferably the cutting wire and thus the first cutting wire portion is a fixed abrasive cutting wire, but the invention is not limited thereto.

The first cutting wire portion may be e.g. long enough to form two non-overlapping windings on the at least one spool, even more preferably more than 10 windings, most preferably more than 500 windings.

Spooling the cutting wire from the cutting area to the at least one spool means that the wire portion at first is in the cutting area, from there is transported and wound onto the at least one spool. The cutting area is normally delimited by wire guide rollers (rolls, pulleys, wheels, etc.). The spool is not directly adjacent the cutting area. Moreover the spool does not form the cutting area.

The spool may comprise a reservoir and a storage spool. This makes the method especially suited for wire saws known from prior art.

According to an embodiment of the inventive method, the following mechanisms may be used to treat the wire: The abrasive particles touch each other, thus chipping off material and sharpening the diamonds. The diamonds enter the spaces between the abrasive particles and thus clean these spaces.

Further embodiments of the invention are indicated in the figures and in the dependent claims. The list of reference marks forms part of the disclosure. The invention will now be explained in detail by the drawings. In the drawings:
- Fig. 1-3: show embodiments of a wire saw;
- Fig. 3a-3d: show a storage spool in combination with a reservoir spool in different winding states;
- Fig. 4: shows an embodiment of a wire saw, wherein a single wire section forms the wire web;
- Fig. 4a-4c: show a storage spool in different winding states;
- Fig. 5-6: shows directions of wire movement during individual steps;
- Fig. 7a-7d: show sub-stebs of step a
- Fig. 8a-8b: show different winding states between wire guide rollers and spool;
- Fig. 9: shows a cutting wire divided into cutting wire portions;
- Fig. 10-13: show the inventive method by illustrating the position of the first cutting wire portion during different method steps; and
- Fig. 14: shows a flow chart showing a possible cutting recipe.

The present invention will be described with reference to exemplary embodiments and the present invention is not limited to particular interconnectors, devices, use or methods, except as defined in the appended claims. Embodiments of the present invention may be used with a variety of methods and systems. It will be apparent to one skilled in the art that the present invention may be practiced in a variety of ways within the scope of the claims. All features shown in relation to the figures may be applied mutatis mutandis to the invention as described in the claims and in the claim description.

As used herein, the indefinite article ("a", "an") denotes the presence of at least one of the referenced item, and the term 'a plurality' or 'multiple' denotes the presence of more than one.

In the figures only parts essential for the current invention are shown schematically, for better understanding the invention.

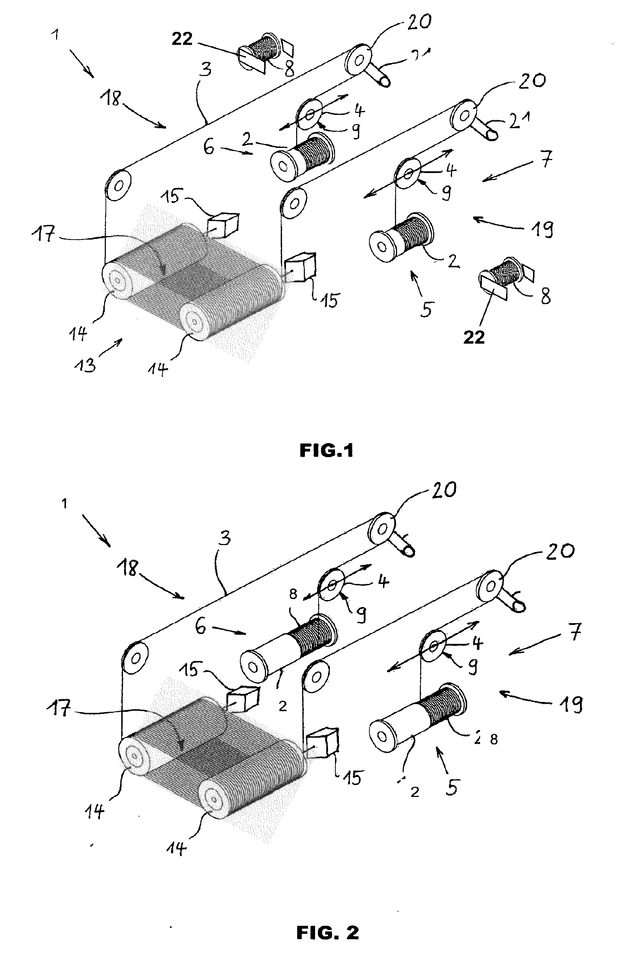

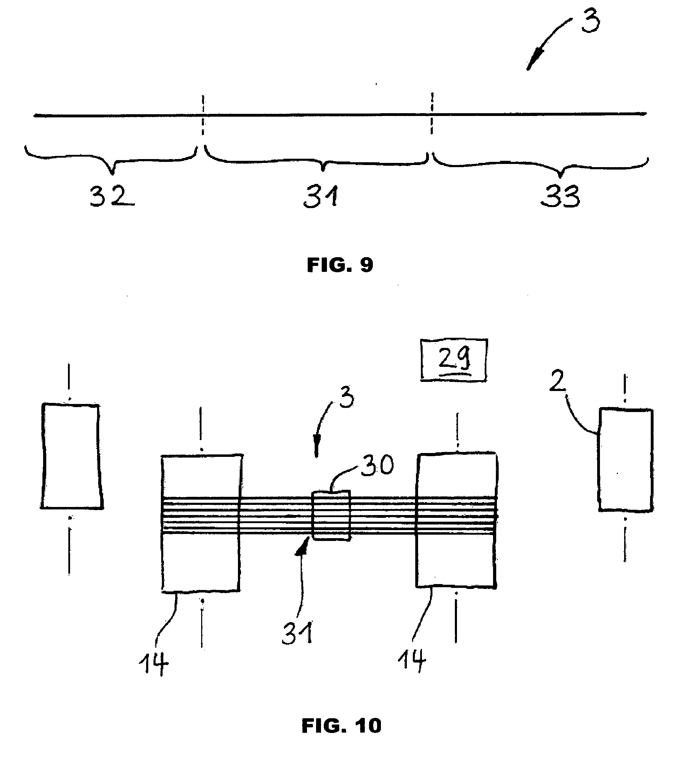

Figs. 9-13 show the principle of the present invention. Figs. 1-8 show preferred embodiments and variants.

Fig. 9 shows a cutting wire 3 having a first cutting wire portion 31, a second cutting wire portion 32 and a third cutting wire portion 33. With respect to the present invention the first cutting wire portion 31 is now of importance. Therefore, in the Figs. 10-13 only the first cutting wire portion 31 is shown. The second and third cutting wire portions 32, 33 that extend from the ends of the first cutting wire portion 31 are hidden (not shown) in Figs 10-13 for clarity reasons. A controller 29 controlling the method, particularly the movement of the wire guide rollers 14 and the spool 2, is shown schematically.

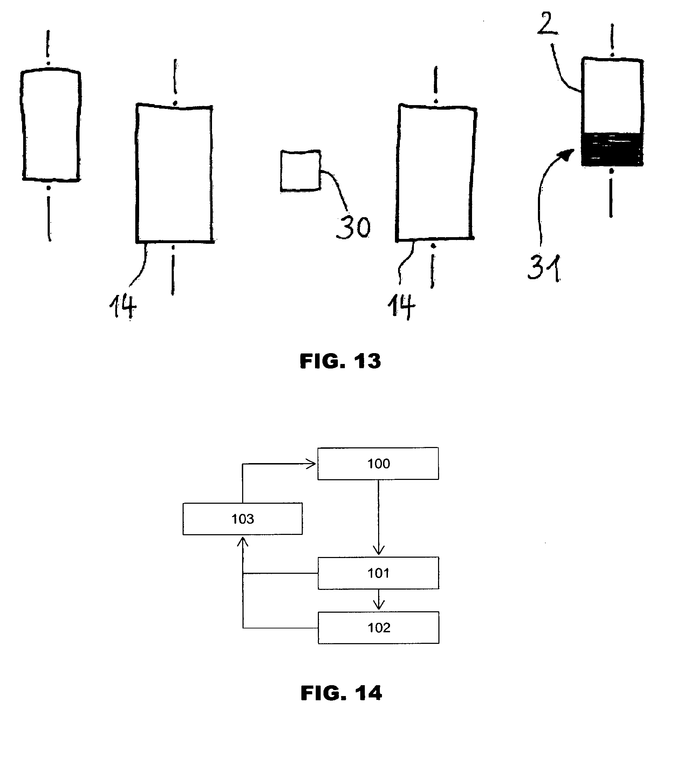

Figs. 10-13 show a wire saw 1 comprising a cutting wire 3 (only first cutting wire portion 31 shown) that runs in multiple loops around at least two wire guide rollers 14 thereby forming a wire web for cutting the workpiece 30. The cutting method comprises the steps of:
(a) moving the cutting wire 3 forming the wire web in a number of cycles back and forth by alternately rotating the wire guide rollers 14 in opposite directions;
(b) transferring, after step (a), a portion of the cutting wire 3 from the wire guide rollers 14 to a spool 2, by rotating the wire guide rollers 14 and the spool 2;
(c) transferring, after step (b), a portion of the cutting wire 3 from the spool 2 to the wire guide rollers 14, by rotating the wire guide rollers 14 and the spool 2;
(d) moving, after step (c), the cutting wire 3 forming the wire web in a number of cycles back and forth by alternately rotating the wire guide rollers 14 in opposite directions,
wherein there exists a first cutting wire portion 31 of the cutting wire 3 that meets the following criteria (i.e. the first cutting wire portion 31 is defined by):
(I) during step (a) and during step (d) the first cutting wire portion forms at least temporarily a wire web portion that comes into contact with the workpiece 30 (as can be seen from Fig. 10),
(II) during step (a) and during step (d) windings formed from the cutting wire 3 along the first cutting wire portion 31 do not exceed a first winding thickness along the entire length of the first cutting wire portion 31 (as indicated in Fig. 10, 11 and 12),
(III) during step (b) the first cutting wire portion 31 is completely wound onto the spool 2, wherein windings formed from the cutting wire 3 along the length of the first cutting wire portion 31 on the spool 2 result in a winding thickness that is higher than the first winding thickness (as can be seen from Fig. 13),
(IV) during step (c) the first cutting wire portion 31 is completely unwound from the spool 2 and returned to the wire guide rollers 14.

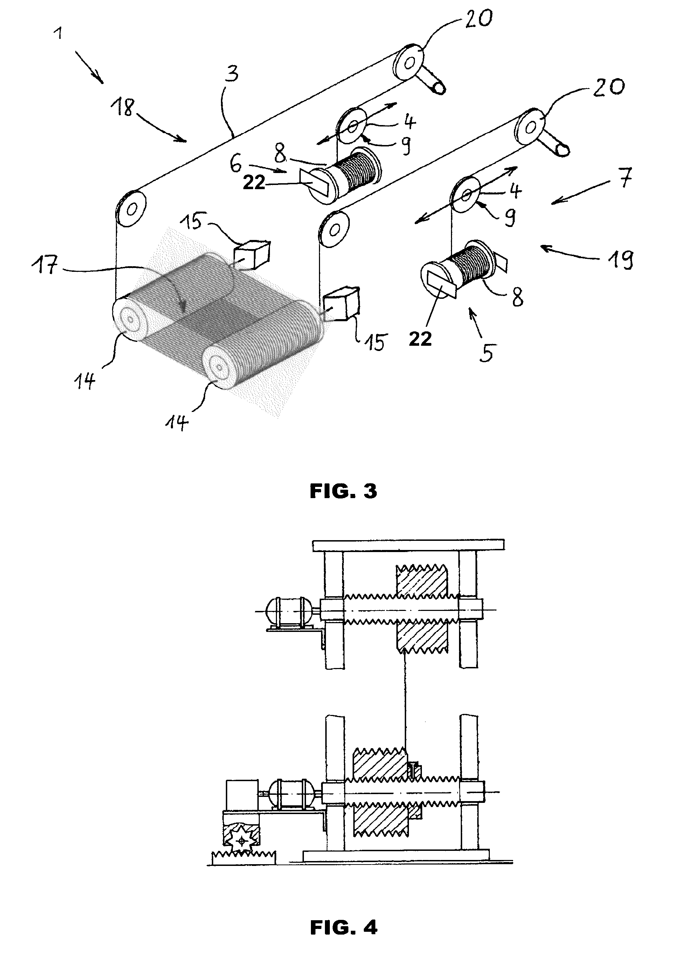

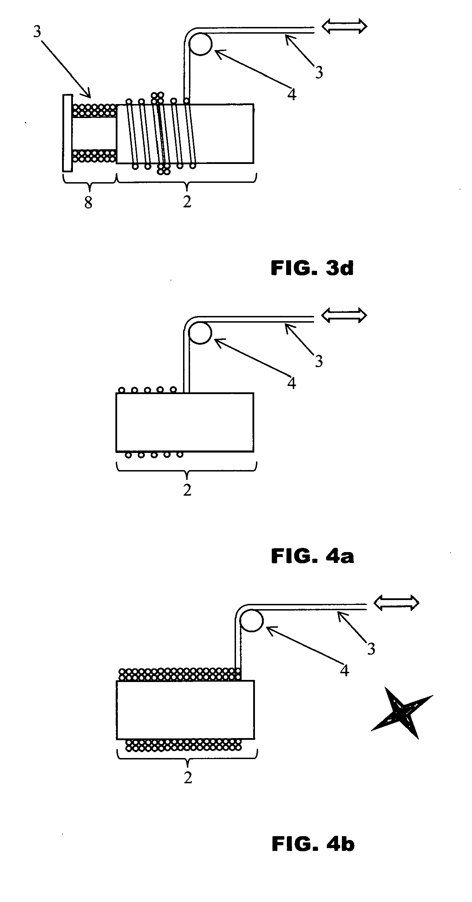

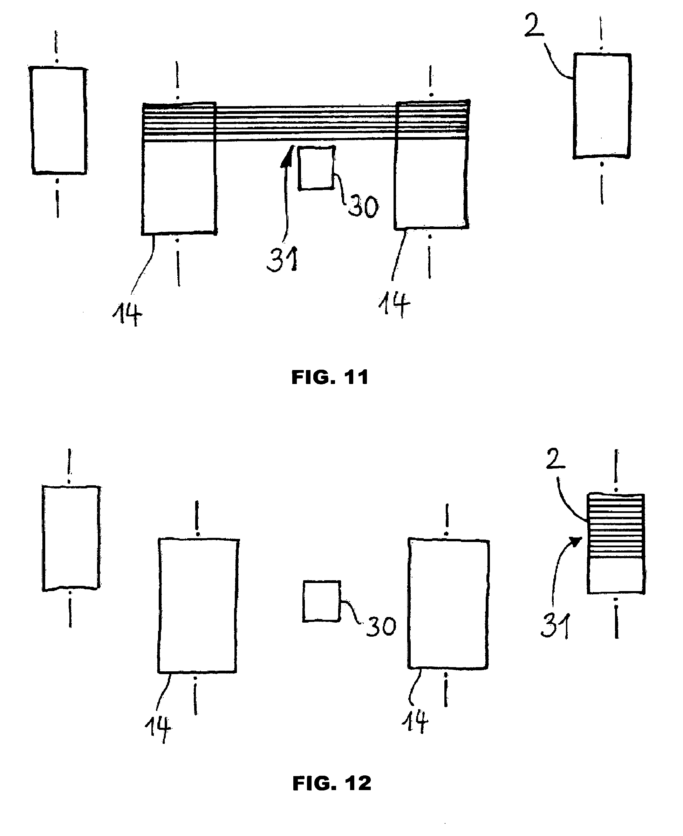

Different wire thicknesses according to criterion (II) and (III) are indicated in Fig. 4a and 4b. It is mentioned that in Figs. 11, 12 and 13 the second (or third) cutting wire portion (not shown) forms the wire web portion that comes into contact with the workpiece 30.

In the embodiment of Fig. 11 - during step (a) - the first cutting wire portion 31 with its entire length remains on the wire guide rollers 14.

In the embodiment of Fig. 12 - during step (a) - the first cutting wire portion 31 is temporarily wound on a spool 2 outside the wire guide rollers 14, wherein windings formed from the first cutting wire portion 31 on the spool 2 do not exceed the first winding thickness (here: do not touch each other).

It would be also possible that in step (a) the first cutting wire portion 31 is only partially transferred to the spool 2.

It is preferred that the first cutting wire portion 31 has a length corresponding to at least 10, preferably at least 50, more preferably at least 100, loops of cutting wire 3 around the at least two wire guide rollers 14. The first cutting wire portion 31 may have a length of at least 400 meters, preferably of at least 1 kilometer.

At least during step (b) and/or during step (c) the workpiece 30 is cut with the wire web of the wire saw 1 with (hidden) second or third wire portion 32 or 33 (Fig. 13), wherein preferably the workpiece 30 is cut in all steps (a) to (d).

Preferably, the spool 2 the first cutting wire portion 31 is spooled onto in step (b) (Fig. 13) is located on the used wire side of the wire guide rollers 14 (i.e. that side to which used wire is transported to be received by a storage spool).

As can be seen the spool 2 is a storage spool for holding cutting wire 3 in non-overlapping, preferably non-touching windings (as can be seen from Fig. 12). The spool in the left-hand side of Figs. 10-13 may be a reservoir spool for holding unused or used-up wire or any combination thereof.

The cutting wire 3 may be a fixed abrasive wire, preferably a diamond wire or a nano tube wire.

In the following an embodiment of a wire saw 1 is described comprising at least two wire guide rollers 14, a cutting wire 3 that runs in multiple loops around at least two wire guide rollers 14 thereby forming a wire web for cutting a workpiece 30, at least one spool 2, 8 outside the wire guide rollers 14 and a controller 29 (Fig. 10) for controlling the cutting procedure, wherein the wire saw 1 (the controller 29) is adapted for carrying out an inventive method.

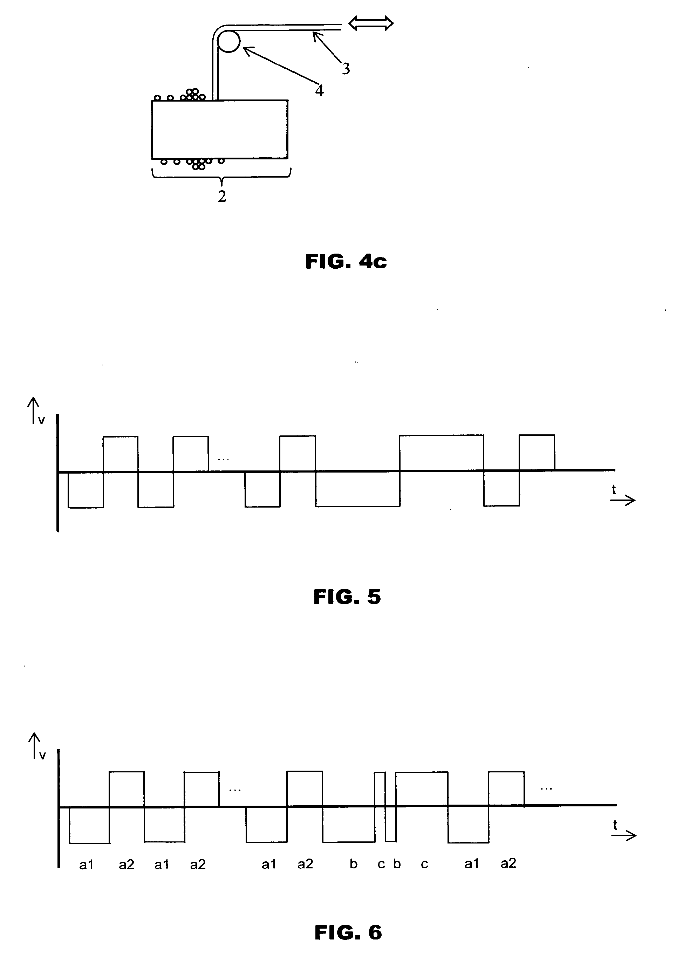

Figures 1, 2 and 3 show embodiments of a multi-wire saw 1. These wire saws 1 are suited to be used in combination with the present invention. Fig. 4 shows an alternative embodiment of a wire saw, wherein a single wire section forms the wire web. Common parts will be described next in reference to both figures and be referenced by the same reference numerals.

A cutting wire 3 extends between wire supply units 5, 6 respectively comprising at least one reservoir spool 8 for holding wire in overlapping windings. These spools respectively hold at least the non-used wire and/or the used-up wire. In addition it may hold wire that is currently being used for cutting.

The supply units 5,6 may comprise (as is the case in figures 1 and 2) storage spools 2 for carrying wire in low density windings (not exceeding the first wire thickness), preferably in non-overlapping windings during a cutting phase.

During normal cutting the cutting wire 3 is reciprocated (meaning being moved in a first and a second, opposite axial (of the wire) direction) between the storage spools 2. Winding density in this document meaning the number of wire windings per unit length of the spool 2 along the axis of spool 2. Low density windings, preferably not overlapping windings, prolong lifetime of cutting wire 3. Cutting wire portions not currently used for cutting are stored on reservoir spools 8 in overlapping windings.

The cutting wire 3 is guided by wire guide rollers 14 (in this document also called: held by or being on the wire guide rollers 14) to form cutting area 17, the cutting area 17 being the area or location where the workpiece 31 (shown in Figs. 10-13) is cut. The wire guide rollers 14 are driven by drives 15.

In figure 1, reservoir spools 8 are mounted to the wire saw 1 on mounting means 22. These reservoir spools 8 hold wire portions that during cutting are not used within the wire web. Moreover, reservoir spool 8 does not rotate during normal cutting.

In figure 2, reservoir spools 8 rotate along with storage spools 2. During normal cutting the wire 3 is spooled on and off storage spools 2. The cutting wire 3 is stored on these storage spools 2 with low density, preferably in non-overlapping, even more preferably in non-touching windings so that the cutting wire 3 does not damage itself and prevented from wear. This system is known from patent application WO 2014/087340 A2 "Wire management system".

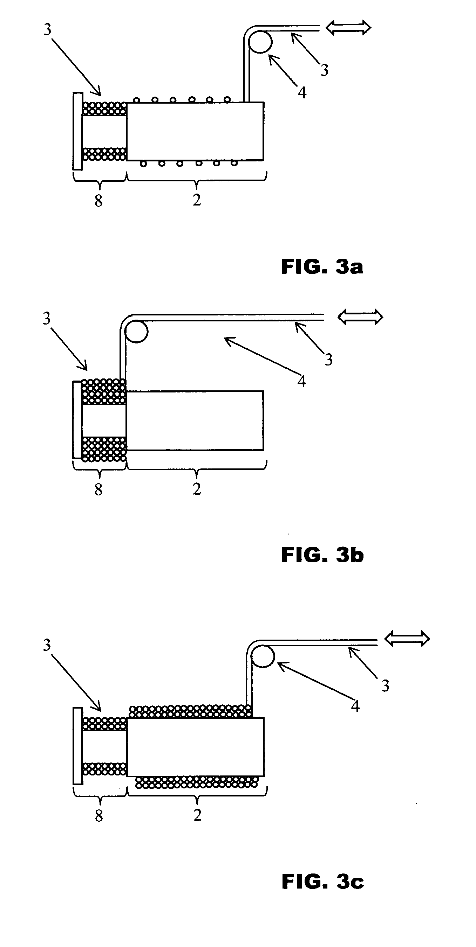

In figure 3, the cutting wire 3 extends between reservoir spools 8 that hold the wire 3 in overlapping windings. The cutting wire 3 is spooled on and of these spools 8 during normal cutting.

The cutting wire 3 is guided by wire guiding means such as pulleys 4, 20. The reservoir spools 8 and storage spools 2 (when present) are respectively located on the new wire side 18 for introducing new cutting wire and/or the used wire side 19 for disposing of used-up wire.

All three systems (Fig. 1-3) are suitable for carrying out the inventive method. The method will be explained in detail in relation to figures 3a-3d that correspond to the system shown in figure 2. Ignoring reservoir spool 8 in figures 3a-3d will show the working of the system from figure 1.

Figure 3a shows cutting wire 3 being wound on a reservoir spool 8 in overlapping windings, then spiraling around a storage spool 2 before traveling to (and from, both indicated by the arrow) the cutting area (not shown) via a traveler pulley 4. Cutting wire 3 is wound on storage spool 2 in a much lower density and thickness than it is wound on reservoir spool 8: as shown respectively one third winding and two windings per length of one wire diameter along the axis of the spool.

As shown in figure 3a, cutting wire 3 is only spooled on and off storage spool 2 during normal cutting. This corresponds to step (a) of the inventive method. The movement of the traveler pulley 4 determines the winding density (or: pitch) of cutting wire 3 on both, the reservoir spool 8 and storage spool 2.

Figure 3b shows step (b) of the inventive method. Now cutting wire 3 - that at this stage of the cutting process is not used up yet - is wound on reservoir spool 8 with a higher thickness (higher than the first winding thickness of step (a)) than the thickness it had on storage spool 2 in figure 3a: the winding thickness now being 4 times the diameter or the winding density four windings per length of one wire diameter along the axis of the spool. Note, that the densities refer to the same portion of cutting wire 3: in figure 3a the portion was wound around storage spool 2, in figure 3c that portion is wound around reservoir spool 8.

Figure 3c shows an alternative way of implementing step (b) that is especially suited when reservoir spool 8 is not present or does not rotate along with storage spool 2. Here, the high density windings (as shown 2 windings per length of one wire diameter along the axis of the spool) are formed on storage spool 2.

After having wound the cutting wire 3 in high density, normal cutting is resumed using low density windings, preferably winding the cutting wire 3 in non-overlapping windings as shown in figures 3a. This corresponds to step (a) or step (d) of the inventive method.

Figure 3d shows an alternative way of carrying out step (b). Here, cutting wire 3 is partially spooled onto spool 2 in overlapping and/or touching manner. Only where the windings overlap or touch, respectively, the cutting wire 3 is sharpened.

Figures 4a, 4b and 4c correspond to figures 3a, 3b and 3d, respectively. The same argumentations hold. The only difference being that the cutting wire 3 is now disconnected from the reservoir spool 8, the latter not being shown in figures 4a, 4b and 4c.

In figures 3 and 4, only one side is shown and may represent the new wire side 18 or the used wire side 19. The other side (that is not shown) needs to take up or provide the wire accordingly.

Figure 5 shows the speed of the cutting wire 3 over time in a highly idealized way. The wire first moves with a negative speed, say toward the used wire side 19. Then the movement of the cutting wire 3 changes direction and becomes positive, now moving to the new wire side 18 (step (a)).

This process is repeated and the workpiece 30 is cut. After numerous repeats of cycles in step (a) the first cutting wire portion 31 is spooled onto a spool 2 outside of the wire guide rollers 14 (step (b)), meaning that the first cutting wire portion 31 is no longer spiraling around the wire guide rollers 14 nor is it in contact therewith. During this step, the first wire cutting portion 31 is spooled onto the spool 2 in touching, preferably overlapping windings so that the first cutting wire portion 31 can sharpen itself.

In a subsequent step (c) the first cutting wire portion 31 is spooled back onto the wire guide rollers 14. Now, the first cutting wire portion 31 is sharp again and step (d) may be performed.

The workpiece 30 is cut at least during step (a) and/or (d), but may also be cut during step(s) (b) and/or (c). Normally, at least during steps (a) and/or (d) the workpiece is moved in direction towards (or through) the wire web. During steps (b) and/or (c) this movement may be interrupted.

Figure 6 shows an alternative cutting method according to the invention. Here, the cutting wire 3 first moves with a negative speed (sub-step (a1) of step (a)), say toward the used wire side 19. Then, the cutting wire speed changes direction and becomes positive (sub-step (a2) of step (a)), now moving to the new wire side 18. Step (a1) may be carried out slightly longer than step (a2) so that new wire is introduced to the cutting area bit by bit.

After having repeated step (a1) and subsequently step (a2) a number of times, the cutting wire 3 is spooled towards the used wire side 19 in step (b), spooling the first cutting wire portion 31 onto a spool outside the wire guide rollers 14 in touching, preferably overlapping windings (higher than first winding thickness). The first cutting wire portion 31 is then spooled back onto the wire guide rollers 14 in step (c). In a consecutive step (b), the first cutting wire portion 31 is again spooled onto the spool outside the wire guide rollers 14 in touching, preferably overlapping windings (higher than first winding thickness). In a following step (c), the first cutting wire portion 31 is spooled back onto the wire guide rollers 14. By moving the first cutting wire portion 31 forward and back during sharpening, it can be sharpened more if desired. Now the first cutting wire portion 31 is sharpened and step (a) may be repeated.

Note that the cutting wire may be spooled to the used wire side 19 in step (b). In this way the non-used wire is not burdened by the sharpening process.

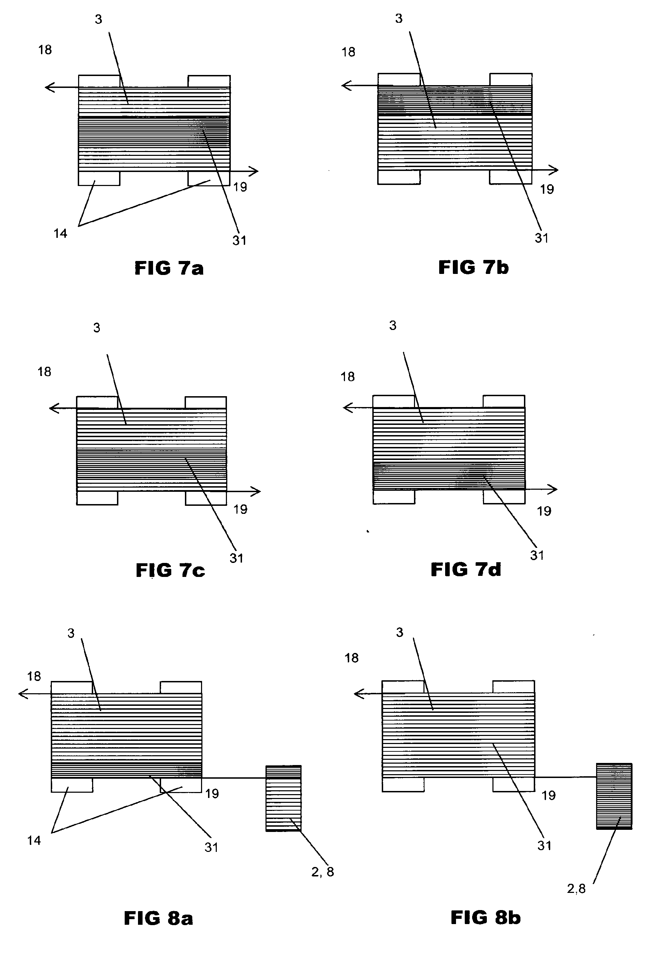

Figures 7a-7d show each a cutting wire 3 on wire guide rollers 14. The cutting wire 3 leaves the wire guide rollers 14 to the left towards the new wire side 18 and to the right towards the used wire side 19.

The first cutting wire portion 31 of cutting wire 3 is a cutting wire portion that fulfills during steps (a) to (d) the criteria (I) to (IV).

Figures 7a-7d show:
- Fig. 7a: step (a1), moving first cutting wire portion 31 of the cutting wire 3 in a first direction towards new wire side 18;
- Fig. 7b: a first part of step (a2), moving first cutting wire portion 31 of the cutting wire 3 in the second, opposite direction towards used wire side 19;
- Fig. 7c: a second part of step (a2), moving first cutting wire portion 31 of the cutting wire 3 further in the second direction towards used wire side 19; and
- Fig. 7d: a last part of step (a2), moving first cutting wire portion 31 of the cutting wire 3 further in the second direction towards used wire side 19;

Now, step (a2) is completed. Continuing to move the wire in this direction would spool first cutting wire portion 31 off the wire guide rollers 14.

Once the first cutting wire portion wire 31 needs sharpening, step (b) is carried out as will be explained with reference to figures 8a and 8b. Starting from figure 7d, the first cutting wire portion 31 is spooled onto a spool 2, 8 outside the wire guide rollers 14 in touching, preferably overlapping windings. The spool may be a storage spool 2 as shown in figure 1, a reservoir spool as shown in figure 3 or a combination thereof as shown in figure 2.

Once the first cutting wire portion 31 has been spooled off the wire guide rollers 14, it now is completely back onto the wire guide rollers 14, thus arriving at the situation of figure 7d.

The first cutting wire portion has now been sharpened and is ready to be used for cutting again.

Figure 14 shows a flow chart showing a possible cutting recipe comprising:
100: Normal cutting phase where wire is wound in low density (not exceeding the first winding thickness), preferably non-overlapping windings - step (a) and/or step (d).
101: Is sharpening of the first cutting wire portion needed ?
102: If sharpening is needed, the first cutting wire portion is wound in high-density windings (second winding thickness, that is higher than the first winding thickness - step (b).
103: In the system according to figure 2, fresh cutting wire portions can be introduced for cutting.

The invention is not restricted to these embodiments. Other variants will be obvious for the person skilled in the art and are considered to lie within the scope of the invention as formulated in the following claims. Individual features described in above specification, particularly with respect to the figures may be combined with each other to form other embodiments and/or applied mutatis mutandis to what is described in the claims and to the rest of the description.

### List of reference signs

- 1: Wire saw
- 2: Storage spool
- 3: Cutting wire
- 4: Traveller pulley
- 5: Wire supplying unit
- 6: Wire receiving unit
- 8: Reservoir spool
- 9: Wire guiding means
- 14: Wire guide rollers
- 15: Driving means
- 17: Cutting area
- 18: New wire side
- 19: Used wire side
- 20: Dancer pulley
- 22: Mounting means
- 30: Workpiece
- 31: First cutting wire portion
- 32: Second cutting wire portion
- 33: Third cutting wire portion

## Claims

1. A method for cutting a workpiece (30) on a wire saw (1) comprising a cutting wire (3) that runs, preferably in multiple loops, around at least two wire guide rollers (14) thereby forming a wire web for cutting the workpiece (30), the method comprising the steps of:
(a) moving the cutting wire (3) forming the wire web in a number of cycles back and forth by alternately rotating the wire guide rollers (14) in opposite directions;
(b) transferring, after step (a), a portion of the cutting wire (3) from the wire guide rollers (14) to a spool (2, 8), by rotating the wire guide rollers (14) and the spool (2, 8);
(c) transferring, after step (b), a portion of the cutting wire (3) from the spool (2, 8) to the wire guide rollers (14), by rotating the wire guide rollers (14) and the spool (2, 8);
(d) moving, after step (c), the cutting wire (3) forming the wire web in a number of cycles back and forth by alternately rotating the wire guide rollers (14) in opposite directions,
wherein there is a first cutting wire portion of the cutting wire (3) that meets the following criteria:
(I) during step (a) and during step (d) the first cutting wire portion (31) forms at least temporarily a wire web portion that comes into contact with the workpiece (30),
(II) during step (a) and during step (d) windings formed from the cutting wire (3) along the length of the first cutting wire portion (31) do not exceed a first winding thickness along the entire length of the first cutting wire portion (31),
(III) during step (b) the first cutting wire portion (31) is completely wound onto the spool (2, 8), wherein windings formed from the cutting wire (3) along the length of the first cutting wire portion (31) on the spool (2, 8) result in a winding thickness that is higher than the first winding thickness, preferably along the entire length of the first cutting wire portion (31),
(IV) during step (c) the first cutting wire portion (31) is completely unwound from the spool (2, 8).

2. Method according to one of the preceding claims, wherein at least one of the steps (a) to (d) is repeated at least 2 times, preferably at least 5 times, more preferably at least 10 times, before carrying out the next step.

3. Method according to one of the preceding claims, wherein after step (d) the steps (b) to (d) are repeated, preferably at least once, preferably at least 2 times, more preferably at least 4 times.

4. Method according to one of the preceding claims, wherein during step (a) the first cutting wire portion (31) at least partially, preferably with its entire length, remains on the wire guide rollers (14).

5. Method according to one of the preceding claims, wherein during step (a) the first cutting wire portion (31) is temporarily wound on a spool (2, 8) outside the wire guide rollers (14), wherein windings formed from the cutting wire (3) along the length of the first cutting wire portion (31) on the spool (2, 8) do not exceed the first winding thickness, preferably do not touch each other.

6. Method according to one of the preceding claims, wherein the first winding thickness is such, that the windings of the first cutting wire portion (31) do not overlap with each other and windings of other wire portions (32, 33), preferably do not touch each other or windings of other wire portions (32, 33), and/or wherein the first winding thickness is smaller than 5d, preferably smaller than 2d, wherein d is the diameter of the cutting wire (3).

7. Method according to one of the preceding claims, wherein the number of overlapping layers formed from windings of the first cutting wire portion (31) during step (a) and/or during step (d) is smaller than the number of overlapping layers formed from windings of the first cutting wire portion (31) during step (b).

8. Method according to one of the preceding claims, wherein the first cutting wire portion (31) has a length corresponding to at least 10, preferably at least 50, more preferably at least 100 loops of cutting wire (3) around the at least two wire guide rollers (14), and/or wherein the first cutting wire portion (31) has a length of at least 100 meters, preferably of at least 500 meters.

9. Method according to one of the preceding claims, wherein at least during step (b) and/or during step (c) a workpiece (30) is cut with the wire web of the wire saw (1), wherein preferably the workpiece (30) is cut in all steps (a) to (d).

10. Method according to one of the preceding claims, wherein the number of cycles in step (a) amounts to at least 10, preferably to at least 20, more preferably to at least 50, and/or wherein the number of cycles in step (d) amounts to at least 2, preferably to at least 10, more preferably to at least 20.

11. Method according to one of the preceding claims, wherein step (b) followed by step (c) are carried out at least 2 times, preferably at least 4 times, more preferably at least 8 times, before carrying out step (d).

12. Method according to one of the preceding claims, wherein step (a) and/or step (d) is carried out at least 10 times, preferably at least 50 times, more preferably at least 200 times more often than step (b) followed by step (c).

13. Method according to one of the preceding claims, wherein the spool (2, 8) the first cutting wire portion (31) is spooled onto in step (b) is located on the used wire side of the wire guide rollers (14) and/or wherein the spool (2, 8) is a storage spool for holding cutting wire in non-overlapping, preferably non-touching windings or a reservoir spool for holding unused or used-up wire or any combination thereof.

14. Method according to one of the preceding claims, wherein the cutting wire (3) is a fixed abrasive wire, preferably a diamond wire or a nano tube wire.

15. Wire saw (1) comprising at least two wire guide rollers (14), a cutting wire (3) that runs in multiple loops around at least two wire guide rollers (14) thereby forming a wire web for cutting a workpiece (30), at least one spool (2, 8) outside the wire guide rollers (14) and a controller (29) for controlling the cutting procedure, wherein the wire saw (1) is adapted for carrying out a method according to one of the preceding claims.
